# FASCICULE DE BREVET EUROPEEN

(11) **EP 2 415 940 B1**
(45) Date de publication et mention de la délivrance du brevet: **06.03.2013**
(21) Numéro de dépôt: 11290323.2
(22) Date de dépôt: 13.07.2011
(51) Int. Cl.: E03F 5/22, F04D 13/08, F04D 15/02

(54) **Station de relevage des eaux usees**
Abwasserpumpstation
Wastewater lifting station

(30) Priorité: 03.08.2010 FR 1003253
(43) Date de publication de la demande: 08.02.2012
(73) Titulaire: KSB S.A.S, 92635 Gennevilliers (FR)
(72) Inventeur: Dassonville, Anne Marie, 59800 Lille (FR)
(74) Mandataire: Eidelsberg, Olivier Nathan

(56) Documents cités:
- US-A- 6 059 208

## Description

Dans les stations de relevage équipées de motopompes, on trouve régulièrement des accessoires de détection servant à la gestion du bon fonctionnement de l'ensemble (régulateurs de niveaux, sondes, etc.).

Ces accessoires sont installés :
- en version pendulaire avec un point de fixation sur le câble électrique en partie supérieure et maintenue en place en partie inférieure par une masse installée directement sur le câble (sensible au flux du liquide et à l'emmêlement des câbles),
- en version sur support fixe, les interventions pour remplacer des accessoires défaillants sont rendues difficiles, car les bassins sont en exploitation et donc en eau, il est souvent fait appel à une société extérieure pour vidanger avant toute intervention, augmentant le coût de l'intervention et il faut encore accéder à la pièce défectueuse en descendant dans la cuve souillée (présence de gaz, déchets, manque de place pour la manutention, ce qui comporte un danger pour l'intervenant).

US-A-6.059.208 divulgue les caractéristiques du préambule de la revendication 1.

L'invention vise une station de relevage d'eaux usées permettant de nettoyer, de changer ou de vérifier un détecteur de niveau, sans qu'un opérateur ait à descendre dans la cuve. On peut remplacer le détecteur alors que la cuve est en eau.

La station de relevage d'eaux usées, suivant l'invention comprend une cuve, un groupe motopompe monté dans la cuve, un détecteur de niveau monté dans la cuve, et un plot dressé sur la face supérieure du fond de la cuve. Elle est caractérisée par un tube vertical, qui est emmanché sur ou dans le plot et auquel le détecteur de niveau est suspendu, et une tige dont l'extrémité basse est fixée au plot, dont l'extrémité haute est au-dessus du niveau maximum de remplissage de la cuve et sur laquelle le tube est emmanché.

Pour retirer le détecteur de niveau, il suffit maintenant de désemmancher du plot le tube auquel est fixé le détecteur de niveau sans avoir à descendre dans la cuve, de changer le détecteur de niveau et de remettre le tube sur le plot en le guidant par la tige sans avoir à mettre les mains dans la cuve.

Par la séparation physique du couvercle, de la pompe, du tube et des accessoires, les interventions se font sur de petits ensembles facilement manipulables contrairement au US 2006/0228222 où ils forment un ensemble monobloc, tout comme dans le US 4886426.

Pour empêcher qu'un tube long ait en haut un débattement trop grand pouvant faire obstacle à la facilité de sa préhension, il est bon de prévoir un élément d'encliquetage du haut du tube monté sur la face intérieure de la cuve. Pour retirer le détecteur de niveau que l'on veut remplacer, on désencliquette le haut du tube et on le retire. Mais, pendant le fonctionnement de la station de relevage, le tube est bien maintenu en place tant en bas, par le plot sur lequel il est emmanché ou dans lequel il est emmanché, qu'en haut, par l'élément d'encliquetage dans lequel il est encliqueté. On peut aussi immobiliser le tube à son extrémité supérieure par une cale annulaire enfilée sur la tige.

Le plot est tubulaire lorsque le tube est emmanché dans le plot. Lorsque le tube est emmanché sur le plot, le plot peut être plein. Lorsque la cuve est en matière plastique, on préfère que le plot vienne de moulage avec la cuve. Lorsque la cuve est en béton, on fixe le plot sur la face supérieure du fond de la cuve.

Le sommet de la cuve est formé d'un couvercle amovible qui se trouve au-dessus du groupe motopompe afin de pouvoir retirer celui-ci, le groupe motopompe n'étant pas fixé au couvercle. Ni le tube, ni la tige ne sont fixés au couvercle. Le sommet de la cuve est formé tout autour du couvercle amovible d'une partie fixe qui se trouve au-dessus du tube. Celui-ci est disposé de manière à être à portée de main en passant par l'ouverture dégagée en retirant le couvercle. Le sommet du tube peut ainsi être fixé aisément au sommet de la cuve, tout en restant accessible s'il faut le relever.

Pour permettre de remettre facilement le tube dans une cuve remplie d'eau trouble après qu'il a été retiré de la cuve, il est prévu, suivant un mode de réalisation perfectionné, que le tube vertical s'étende vers le haut au moins jusqu'à un niveau supérieur au niveau maximum de remplissage de la cuve. De préférence, la tige est plus longue que le tube, mais elle peut être plus courte aussi que celui-ci.

Aux dessins annexés, donnés uniquement à titre d'exemple :
- la Figure 1: est une vue en coupe suivant un plan vertical d'une station de relevage d'eaux usées suivant l'invention, tandis que
- la Figure 2: est une vue en coupe d'une variante.

La station représentée aux figures comprend une cuve ayant un fond 1 et un sommet composé d'un couvercle 2 et d'une partie 3 fixe entourant le couvercle. Sur la face supérieure du fond 1 repose un groupe 5 motopompe qui n'est pas fixé au couvercle 2, qui repose sur des pattes 4 et qui a une aspiration 6 et une tubulure de refoulement à l'extérieur de la cuve, qui est symbolisée par une flèche F.

De la face supérieure du fond 1 se dresse un plot 7 plein, venu de moulage avec la cuve en matière plastique, plot sur lequel est emmanché un tube 8 indépendant du couvercle et s'étendant vers le haut jusqu'à un niveau supérieur au niveau maximum de remplissage de la cuve. Ce niveau maximum de remplissage de cuve est détecté par un détecteur 9 de niveau d'alerte, qui est suspendu par un câble 10 électrique au tube 8 par l'intermédiaire d'un collier 11. Sur le tube 8 sont suspendus, de la même façon, un autre détecteur 12 de niveau de marche et un troisième détecteur 13 de niveau d'arrêt.

Sur la face latérale supérieure de la cuve est fixé un élément 14 d'encliquetage.

Le tube 8 est emmanché sur une tige 15 de guidage, dont le bas est vissé sur le plot 7 et dont le haut dépasse du niveau maximum de remplissage de la cuve.

La station de relevage d'eaux usées fonctionne de la manière suivante.

Pour remplacer l'un des flotteurs 9, 12, 13 encrassé ou autrement défaillant, on retire le couvercle 2, on désencliquette le tube 8 de l'élément 14 d'encliquetage et on retire le tube 8 en le désemmanchant du plot 7 et en le passant par l'ouverture dégagée par l'enlèvement du couvercle 2. On remplace ou on nettoie le détecteur 9, 12 ou 13 défaillant. On remet le tube 8 en place en s'aidant de la tige 15, en emmanchant ainsi facilement le tube 8 sur le plot 7, même si les eaux contenues dans la cuve sont troubles.

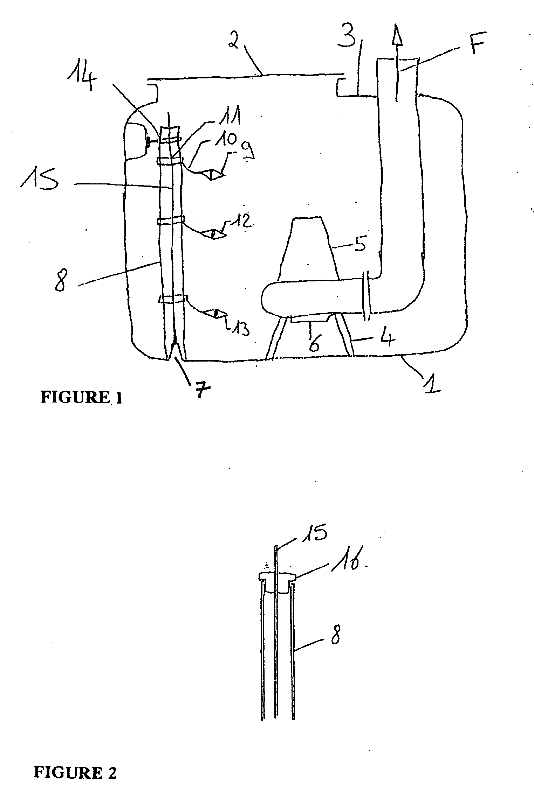

A la Figure 2, le haut du tube 8 est immobilisé sur la tige 15 par une cale 16 annulaire, la tige 15 dépassant du tube 8.

## Revendications

1. Station de relevage d'eaux usées, comprenant une cuve, un groupe (5) motopompe monté dans la cuve et un détecteur (12) de niveau monté dans la cuve, un plot (7) dressé sur la face supérieure du fond (1) de la cuve,
**caractérisée par** :
- un tube (8) vertical, qui est emmanché sur ou dans le plot (7) et auquel le détecteur (12) de niveau est suspendu, et
- une tige (15) dont l'extrémité basse est fixée au plot (7), dont l'extrémité haute est au-dessus du niveau maximum de remplissage de la cuve et sur laquelle le tube (8) est emmanché.

2. Station suivant la revendication 1, **caractérisée en ce que** le tronçon de l'extrémité basse de la tige (15) est fileté et se visse dans un taraudage du plot (7).

3. Station suivant la revendication 1 ou 2, **caractérisée en ce que** la tige (15) a le même axe longitudinal que le tube (8).

4. Station suivant la revendication 1, 2 ou 3, **caractérisée en ce que** la tige (15) est plus longue que le tube (8).

5. Station suivant l'une des revendications précédentes, **caractérisée en ce que** le tube (8) est immobilisé par un élément (14) d'encliquetage fixé à la cuve.

6. Station suivant l'une des revendications précédentes, **caractérisée en ce que** le tube (8) est immobilisé à son extrémité supérieure par une cale (16) annulaire enfilée sur la tige (15).

7. Station suivant l'une des revendications précédentes, **caractérisée en ce que** le tube (8) s'étend vers le haut, au moins jusqu'à un niveau supérieur au niveau maximum de remplissage de la cuve.

8. Station suivant l'une des revendications précédentes, **caractérisée en ce que** la cuve a un couvercle (2) et le groupe (5) motopompe n'est pas fixé au couvercle (2).

9. Station suivant l'une des revendications précédentes, **caractérisée en ce que** la cuve a un couvercle (2) et le tube (8) n'est pas fixé au couvercle (2).

10. Station suivant l'une des revendications précédentes, **caractérisée en ce que** la cuve a un couvercle (2) et la tige (15) n'est pas fixée au couvercle (2).

## Claims

1. Station for lifting waste water, comprising a tank, a motor pump group (5) mounted in the tank and a level detector (12) mounted in the tank, a mount (7) arranged on the upper surface of the bottom (1) of the tank, **characterised by**
- a vertical tube (8) which is fitted onto or into the mount (7) and on which the level detector (12) is suspended and
- a rod (15), the bottom end of which is fixed to the mount (7), the top end of which is above the maximum filling level of the tank and onto which the tube (8) is fitted.

2. Station according to claim 1, **characterised in that** the section of the bottom end of the rod (15) is threaded and screws into a tapping of the mount (7).

3. Station according to claim 1 or 2, **characterised in that** the rod (15) has the same longitudinal axis as the tube (8).

4. Station according to claim 1, 2 or 3, **characterised in that** the rod (15) is longer than the tube (8).

5. Station according to any one of the preceding claims, **characterised in that** the tube (8) is immobilised by a clip-locking element (14) fixed to the tank.

6. Station according to any one of the preceding claims, **characterised in that** the tube (8) is immobilised at its upper end by an annular wedge (16) threaded onto the rod (15).

7. Station according to any one of the preceding claims, **characterised in that** the tube (8) extends to the top, at least up to a level higher than the maximum filling level of the tank.

8. Station according to any one of the preceding claims, **characterised in that** the tank has a cover (2) and the motor pump group (5) is not fixed to the cover (2).

9. Station according to any one of the preceding claims, **characterised in that** the tank has a cover (2) and the tube (8) is not fixed to the cover (2).

10. Station according to any one of the preceding claims, **characterised in that** the tank has a cover (2) and the rod (15) is not fixed to the cover (2).

## Patentansprüche

1. Abwasserhebeanlage, umfassend einen Tank, ein in dem Tank montiertes Motorpumpenaggregat (5) und einen in dem Tank montierten Füllstandsgeber (12), einen auf der Oberseite des Bodens (1) des Tanks errichteten Block (7), **gekennzeichnet durch**
- ein vertikales Rohr (8), das auf oder in den Block (7) gepasst ist, und an dem der Füllstandgeber (12) angehängt ist, und
- eine Stange (15), deren unteres Ende am Block (7) befestigt ist, deren oberes Ende sich oberhalb des maximalen Füllstands des Tanks befindet, und auf die das Rohr (8) gestülpt ist.

2. Anlage nach Anspruch 1, **dadurch gekennzeichnet, dass** der Abschnitt des unteren Endes der Stange (15) mit Gewinde versehen ist und in ein Gewinde des Blocks (7) geschraubt wird.

3. Anlage nach Anspruch 1 oder 2, **dadurch gekennzeichnet, dass** die Stange (15) dieselbe Längsachse aufweist wie das Rohr (8).

4. Anlage nach Anspruch 1, 2 oder 3, **dadurch gekennzeichnet, dass** die Stange (15) länger ist als das Rohr (8).

5. Anlage nach einem der vorhergehenden Ansprüche, **dadurch gekennzeichnet, dass** das Rohr (8) durch ein am Tank befestigtes Einrastelement (14) festgehalten wird.

6. Anlage nach einem der vorhergehenden Ansprüche, **dadurch gekennzeichnet, dass** das Rohr (8) an seinem oberen Ende durch eine auf die Stange (15) gefädelte ringförmige Abstützung (16) festgehalten wird.

7. Anlage nach einem der vorhergehenden Ansprüche, **dadurch gekennzeichnet, dass** sich das Rohr (8) nach oben mindestens bis zu einer Höhe oberhalb der maximalen Füllhöhe des Tanks erstreckt.

8. Anlage nach einem der vorhergehenden Ansprüche, **dadurch gekennzeichnet, dass** der Tank einen Deckel (2) aufweist und das Motorpumpenaggregat (5) nicht am Deckel (2) befestigt ist.

9. Anlage nach einem der vorhergehenden Ansprüche, **dadurch gekennzeichnet, dass** der Tank einen Deckel (2) aufweist und das Rohr (8) nicht am Deckel (2) befestigt ist.

10. Anlage nach einem der vorhergehenden Ansprüche, **dadurch gekennzeichnet, dass** der Tank einen Deckel (2) aufweist und die Stange (15) nicht am Deckel (2) befestigt ist.
